Europäisches Patentamt

European Patent Office

Office européen des brevets

(19)

(11) EP 0 625 699 B1

(12) **EUROPEAN PATENT SPECIFICATION**

(45) Date of publication and mention
of the grant of the patent:
**22.01.1997 Bulletin 1997/04**

(51) Int Cl.$^6$: **G01J 5/00**, G01J 5/60,
F23N 5/08

(21) Application number: **93203718.7**

(22) Date of filing: **29.12.1993**

(54) **An apparatus for real-time mapping the temperature of a flame**

Vorrichtung zur Abbildung der Temperaturverteilung einer Flamme in Echtzeit

Appareil pour faire en temps réelle l'image thermique d'une flamme

(84) Designated Contracting States:
**DE FR GB IT**

(30) Priority: **18.05.1993 IT MI931015**

(43) Date of publication of application:
**23.11.1994 Bulletin 1994/47**

(73) Proprietor: **FINMECCANICA S.p.A. AZIENDA ANSALDO**
**I-16128 Genova (IT)**

(72) Inventors:
• **Parenti, Riccardo**
 **I-16132 Genova (IT)**
• **Bosia, Giorgio**
 **I-16144 Genova (IT)**

• **Verrecchia, Paolo**
 **I-16038 Santa Margherita, Ligure (Genova (IT)**

(74) Representative: **Falcetti, Carlo et al**
**c/o JACOBACCI & PERANI S.p.A.**
**Via Visconti di Modrone, 7**
**20122 Milano (IT)**

(56) References cited:
**EP-A- 0 469 258** **US-A- 5 225 883**

• **PATENT ABSTRACTS OF JAPAN vol. 12, no. 71 (P-673) 6 March 1988 & JP-A-62 211 521 (ISHII HIROMITSU ET AL.) 17 September 1987**
• **PATENT ABSTRACTS OF JAPAN vol. 13, no. 418 (M-871) 18 September 1989 & JP-A-01 155 117 (CENTRAL RES INST OF ELECTRIC POWER IND) 19 June 1989**

**Description**

The present invention relates to an apparatus for real time mapping the temperature of a flame, in particular for mapping, even on a three-dimensional basis, one or more flames of boiler burners.

Industrial processes are controlled by parameters of an inclusive type (power output, pressure, etc.).

There may be several plant conditions capable of giving the same values for the quantities of interest which simultaneously optimize the plant stresses or other possible ancillary parameters such as, in the instance of incinerator boilers, the release of pollutants.

The studies on three-dimensional (3D) mapping systems for flame temperature partake in this line of technological development aimed at a more exhaustive knowledge and/or control of parameters of interest in the operation of a boiler.

The applications of these flame characterization studies follow two major courses, a first one directed to the study, development, design assistance, and installation of burners, and the second concerned primarily with the plant operation and the ability to also keep track of its evolution and provide appropriate corrective actions.

Known are, for example from European Patent Application EP-A-469258 published on 5-2-1992, three-dimensional mapping arrangements for the temperature of a flame which generate, from a picture picked up by a TV camera, a vector or processed image indicating the temperatures at various spots on the flame.

The temperature picture is obtained by an essentially software-based process using appropriate algorithms.

The processing method, which is particularly cumbersome and applied repetitively to each spot of the picture imaged by the TV camera, results in the generation of a thermal map which is effected off-line, and hence available at a retarded time with respect to the imaging event which is much longer than the generation period of the next pictures picked up by the TV camera.

These mapping arrangements, while being at least in part effective to meet study and designing requirements that require no immediate response to the evolution of the combustion and flame generation process, are in no way appropriate to track and describe dynamically the flame generation process in order to allow its control or even the mere observation and monitoring of the outcome of actions taken, such as changes in the burner orientations.

Thus, the need for a picture processing system which can operate in real time is felt particularly.

Even where modern data processing systems are employed, picture processing is an operation that uses up considerable machine time, a time which can only be shortened by resorting to processors with adequate computing power or a particularly complex architecture whose cost is so high as to be out of proportion to the benefits to be derived from their use.

To appreciate the problem, the meaning attached to "real-time image processing" and "on-line monitoring" herein should be made clear first.

In monitoring industrial processes, it is necessary that information be obtained about the key parameters within an adequate time span.

To display on a monitor the quantities of interest in real time is to provide the operator with the results in time for him to correctly understand them and take the appropriate actions.

For this purpose, the meaningful quantities involved must be monitored on a virtually continual basis, which implies constantly updated displaying of same.

If man enters the monitoring process as an observer, it should be considered that continual processes must be described as a sequence of images at a rate of no less than 25 images per second, in practice a rate of 50 half-images per second being used for TV recordings.

Consequently, in this context, real-time image processing is to process each image within a 40-ms time period so that the user can be presented images which are processed at the same rate as the starting images.

Image processing means, in the simplest of cases, that the picture is scanned as a plurality of image points or pixels with a resolution which is commensurate to a perception threshold of the human eye, and that each pixel is processed to so change its hue or color as to make the image easier to interpret for particular requirements, such as visual recognition of spot temperatures.

This means that where a standard resolution is adopted which provides for image scanning as 512x512 pixels, information concerning 262,144 pixels must be processed within a 40-ms period.

If this processing is carried out in succession, the processing time per pixel becomes equal to 150 nsec or less.

This is the more true when one thinks of substituting, for the human operator in the monitoring and control process, an electronic system to automatically interpret the data from the field, with the electronic system being capable of operating with much shorter response times than an operator.

Processing such a body of data within the limits imposed on it would require the availability of a computing power on the order of hundreds million of instructions per second, which can only be accomplished using supercomputers.

These limitations are overcome by the apparatus for real-time mapping the temperature of a flame according to the present invention, which is based on the following considerations:

1. The temperature of each spot on a flame as picked up by a color TV camera can be determined by measuring the light emission of the spot at two discrete wavelengths, and is unrelated to other varying factors and the characteristics of the other spots (bicolor pyrometry theory).

2. The emission-to-temperature relationship is univocal and follows a known law.

3. The presentation of the temperature reading at each spot as a processed image displayed in false colors is also univocal and results from an independent process of the temperature determining process.

Based on such considerations, the apparatus for real-time mapping the temperature of a flame according to the present invention is structured as an architecture of the pipelined type wherein the various functional units are cascade operated, each within a predetermined period, to carry out a predetermined step of the processing method, and wherein the numerical processing is reduced to transcoding operations.

The signals generated by a TV camera, and as suitably filtered and added to a constant offset voltage component, are sampled and digitalized in real time at a higher frequency than the maximum signal frequency (corresponding to the frequency of presentation of the individual image pixels).

The corresponding digitized signals are stored, at the same frequency as the sampling frequency, into output or buffer registers and used jointly as read address in a high-speed memory which associates, as information read from each read address, a corresponding binary code representing a temperature.

The code output from the memory is stored, at the sampling frequency, into an output or buffer register which addresses a plurality of high-speed memories, or conversion tables, which relate for each temperature value received as read address to a predetermined color code.

The color codes are used each as an input code (possibly through a latching register loaded at the sampling frequency, if necessary) to a corresponding digital-to-analog converter which generates an analog color signal for use in driving a TV monitor.

According to further aspects of the present invention, the apparatus comprises clamping circuits, or circuits for periodically grounding the input signals, which circuits are synchronized to the line synchronism of the TV camera, to provide a signal level corresponding to black, actually equal to the 0 electric level, and color code compression circuits for the color codes output from the analog-to-digital converters, to minimize the storage capacity required to generate the temperature code, thereby making the use of reduced capacity memories, inherently faster, possible.

Thus, a simple low-cost apparatus is provided which can operate in real time and be implemented as a single printed circuit board integratable to data acquisition systems of low cost.

The features and advantages of the invention will be more clearly apparent from the following description of a preferred embodiment and modifications thereof, and the accompanying drawings, in which:

Figure 1 is a block diagram of a data acquisition system incorporating the apparatus of the present invention;

Figure 2 shows in detail block diagram form a preferred embodiment of an apparatus according to the invention;

Figure 3 shows a modified embodiment of a portion of the apparatus in Figure 2.

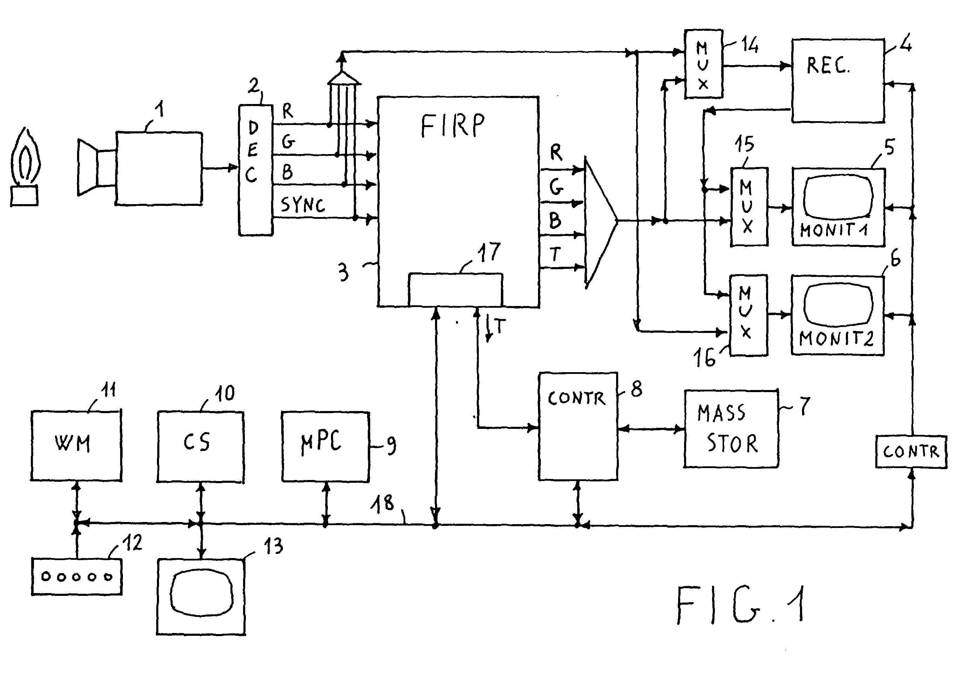

With reference to Figure 1, an acquisition system for image processing in real time, which incorporates the apparatus forming the subject matter of the present invention, comprises a TV camera 1, preferably provided with detectors of the CCD (Charge Coupled Device) type and a signal output conformant with at least one of the current standards (e.g. PAL), a TV camera signal decoder 2 into its RGB and SYNC components (which may be unnecessary where the TV camera outputs such signals directly), a mapping apparatus 3 (specific subject matter of the present invention), an image video recorder 4, a pair of TV monitors 5, 6, a disk or tape bulk storage 7, a control unit 8 for the bulk storage 7, a microprocessor 9, a control memory 10 and a working memory 11.

The system is completed by a control keyboard 12 and a possible third monitor 13, if interference of the system handling processes with the image display processes is to be avoided, and a plurality of multiplexers 14, 15, 16.

The units 7, 8, 9, 10, 11, 12, 13 form a conventional data processing system, such as a personal computer or PC, which interacts only marginally with the image acquisition and processing apparatus, it being operated in a largely independent manner.

Therefore, the PC is not required to have any particular computation power.

The apparatus 3 can real-time process in a self-supporting manner the output signal from the decoder 2, to relieve the microprocessor 9 of any real-time processing task.

The signals generated by the apparatus 3 are be supplied to the monitor 5 through the multiplexer 15 to display a processed image or temperature map, and through the multiplexer 14 to the video recorder 4 for recording therein.

The apparatus 3 is also provided with an interface 17 for communication with the system bus 18 to receive commands from the microprocessor 9 and transfer matched signals to the microprocessor 9 and the working memory 11 or the bulk memory 7, possibly with DMA mechanisms for directly accessing the memory, and dedicated gates and channels for minimal interference with the microprocessor 9.

Before describing the architecture of the apparatus 3 in detail, it may be appropriate to briefly recall the essential concepts of color optical pyrometry as used in the apparatus 3 to process the image.

The temperature of a luminous body, in particular a flame, is given by,

$$T = K1/ln (K2*E1/E2)$$

where, T is the temperature in Kelvin degrees, E1 and E2 are the light emissions according to Plank's law at two discrete wavelengths corresponding, preferably but not necessarily, to the red channel and the green channel, K1 and K2 are two parameters which, with the architecture of the system and its components (optics, TV camera, input and conversion stage, operating conditions) fixed, would be constant and, therefore, evaluated once for all at the system setting stage.

Once these coefficients K1, K2 are set, it becomes possible to define the temperature T by measuring the light emissions E1, E2 and using the above formula.

Temperature may be expressed in either °C or °F or any other systems, by means of appropriate and well-known conversion formulae.

A more exhaustive discussion of color pyrometry is to be found in the aforementioned Application EP-A-496258.

The problem of processing an image in real time is, therefore, reduced to measuring, for each spot of the image, the light emission E1, E2 of the spot and computing the corresponding temperature by the formula above.

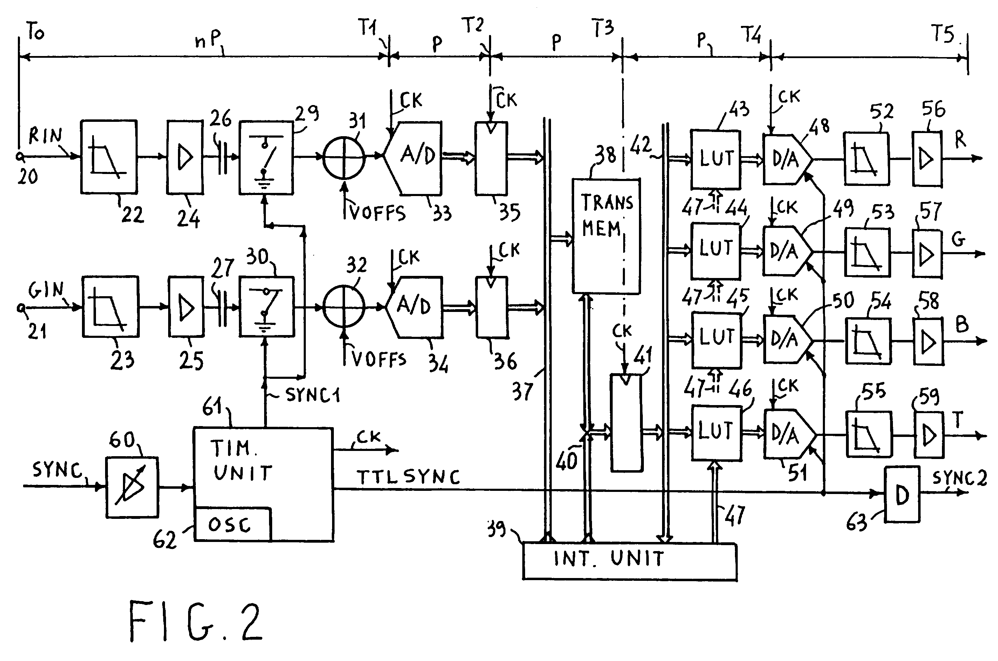

The apparatus 3, illustrated in detail by Figure 2, carries out these operations in real time and generates the temperature indications about each spot of the image at the same frequency as, or preferably at a higher frequency than, that at which the light emission E1, E2 information about the individual spots is input, that is within a shorter time than 100 nsec on the average. This does not mean that the information about the individual spot is processed at shorter times than 100 nsec; in practice, the processing is split into steps carried out in discrete cascaded functional units, each step being completed within a shorter time than 100 nsec.

After a functional unit has completed the operations to be carried out for one spot, it can at once proceed to carry out the operations for another spot.

In this way, the processing of information about the various spots, as partially overlapped in time, will result in a mean processing time of less than 100 nsec, even though the time actually taken to process a single spot is bound to be longer, e.g. in the 300 nsec range.

The real-time mapping apparatus of Figure 2 comprises a pair of low-pass filters 22, 23, each having an output coupled to an amplifying/impedance matching analog circuit or buffer 24, 25.

The outputs from the two buffers 24, 25 are respectively connected capacitively, through capacitors 26, 27, to the inputs of two reset or signal periodical grounding circuits 29, 30, known as clamp circuits, upon command by a periodic signal SYNC1.

The outputs of the two clamp circuits 29, 30 are respectively connected to an input of two analog circuits (operational amplifiers) 31, 32 functioning as algebraic adders which subtract, from an input signal, a suitable reference or offset voltage VOFFS.

The adder outputs are respectively connected to the input of two analog-to-digital converters clocked by a signal CK having a suitable frequency which convert the input signal to a 10-bit binary code.

The outputs of the two converters 33, 34 are respectively connected to the inputs of two staticizing registers controlled by the signal CK.

The outputs of the two registers 35, 36. being each a 10-bit output, are connected to a 20-wire address channel or bus 37 which is connected to the address inputs of a memory 38 (TRANS MEMORY). The memory 38 may be a read-only memory (ROM type), a programmable memory (EEPROM), or read/write static memory (RAM).

In the last-mentioned cases, the channel 37 may be used as an address channel to the memory 38 for program and/or write operations, and to this aim, it is connected to an interface unit INT.UNIT 39 which supplies, through the channel 37, write selection addresses to the RAM 38, and through a channel 40, data for writing into the RAM 38.

The memory 38 parallelism may be selected as required, and in the example described, is preferably an 8-bit one.

The information read in the memory 38 is loaded into a staticizing register 41 clocked by the signal CK.

The output information from the register 41 is input to a distribution channel 42 which will distribute it, as selection addresses, to a plurality of memories 43, 44, 45, 46 functioning as translation tables "LOOK-UP TABLES" (LUT).

These memories may also be read-only memories, or alternatively read/write memories, in which case they can receive write addresses over the channel 42, as purposely connected to the interface unit 39, while the selection signals and data to be written can be also received by the unit 39 over a channel 47.

The outputs of the various LUTs are respectively connected to the input of a plurality of digital-to-analog converters 48, 49, 50, 51, being input clocked by the signal CK and with the output grounded (or at a high impedance) upon receiving a command signal TTLSYNC.

The analog output of the various converters is connected to the input of a low-pass filter 52, 53, 54, 55, respectively, and thence to the input of decoupling and level/impedance matching circuits 56, 57, 58, 59.

The apparatus is completed by a decoupling/ amplifying circuit 60 with adjustable gain which is input a line synchronism signal SYNC and by a timing unit 61 provided with an internal oscillator 62 having an input connected to the output of the circuit 60 for receiving the signal SYNC.

The unit 61 generates a first signal SYNC1 which is conveniently delayed with respect to SYNC, a second signal TTL SYNC which is conveniently delayed with respect to SYNC and has suitable electric characteristics to control the converters 48...51 according to the technology (e.g. TTL) in which these are implemented and a periodic pulsive signal CK at a suitable frequency.

The signal TTL SYNC is input, as well as to the converters 48, 51, to a delay and level matching element 63 which outputs a signal SYNC2 having suitable electric characteristics to control a TV monitor.

The interface unit 39 is connected, through an output gate 64, to the system bus of the data acquisition and processing system for receiving set commands and information, e.g. to load the memories with suitable information, to adjust the OFFSET voltages as required, etc., and for transferring the information output from the register 41 or from one or more of the memories 43...46 to the outside world.

The operation of the apparatus is self-explanatory.

Through the input terminals 20, 21, the filter 22 and 23 is input a signal RIN and GIN, respectively, representing the light emission or luminance, respectively in the red and green bands, of successive spots of an image being scanned by a TV camera.

These signals are preferably (but not necessarily) of the analog type conformant with the CCIR RGB Standard, and the luminance is represented by a signal amplitude or voltage relative to a reference level 0, periodically taken by the signal correspondingly with the synchronism signal and indicating null, i.e. black, luminance.

The signal modulation lies typically within a frequency band of about 15 kHz (the frequency of the synchro signal) to about 5 MHz.

A signal period of 140-150 nsec typically corresponds to the presentation of a spot luminance to the succession of spots in a line, the start or the end of the line being defined by the synchronism signal SYNC.

It has been found that the output TV signals from a TV camera have a level of black which tends to develop even significant fluctuations, tied to the signal amplitude, from the level of 0 V referred to ground and at a much lower frequency than line frequency.

These fluctuations, in the image recording process, do not alter the visual perception of the images to any significant extent, but in a process wherein the luminance signal is used for temperature computation purposes, they would yield highly inaccurate results affected by non-systemic errors dependent on the signal amplitude and which would be impossible or difficult to recover.

For this reason, the signals RIN and GIN, as filtered through the filters 22 and 23, are input to the amplifiers and decouplers 24, 25 whose output is connected capacitively (through the capacitors 26, 27) to the clamping circuits 29, 30 which connect the output of the capacitive coupling 26, 27 periodically to ground on command by the signal SYNC1.

The signal SYNC1 is generated by the timing unit 61 with a suitable delay with respect to the input signal SYNC to the circuits 60 and at the required electric level to control the circuits 29, 30.

In this way, the luminance signals are periodically latched to a constant reference level 0, when the luminance signal is indicating black, and the signal fluctuations are cancelled.

The signals, thus corrected, are respectively input to the algebraic adders 31, 32, and shifted thereby with the suitable addition of a predetermined OFFSET voltage for matching the swept field of the luminance signal output from the adders to the input field of the analog-to-digital converters 33, 34.

The converters 33, 34 are clocked by the signal CK output from the unit 21 for sampling the input signal at at least twice the frequency of the signal band, that is at at least 10 MHz, and preferably with a period P of 70-75 nsec, so as to discretize the line signal in a succession of 1024 samplings.

The conversion of the sampled signal is not instantaneous. However, A/D converters are commercially available which can effect the conversion within time intervals on the order of a few tens nsec.

Thus, if T1 is the time when a sampling is performed with assertion of the signal CK, and T2 is the next time that the signal CK is again asserted, the sampled signals will be already available in digital form at the output of the converters 33, 34, and can be loaded into the registers 35, 36 clocked by the-signal CK. At the same time, a fresh sampling and A/D conversion operation can be commenced.

The 10-bit codes loaded into the registers 35, 36 represent the two luminance values E1, E2 which enable the corresponding temperature T to be computed by the formula given above and are input to the memory 38.

The memory 38 is written and contains, similar to a table like the Pythagorean table, for each addressable location, a binary code, e.g. an 8-bit code, representing the flame temperature corresponding to the two luminance values used as address components.

If the address comprises 20 bits, the memory shall have, in its simplest form, a capacity of 1 Mbyte, and can readily be implemented with one or more commercially available components having read times of less than 70 nsec.

In this way, at a time T3 following T2, when the signal CK is again asserted, the code read from the memory 38 after it is addressed with a current code from the time T2 is sure to be available on the output channel 40 and can be loaded into the register 41.

The 8-bit code loaded into the register 41 and indicating the temperature of the image spot described by the signals RIN, GIN at time T0 is used, in turn, to address the memories 43...46.

While the 8-bit temperature code allows the field of the temperature under examination to be discretized into 256 values, a representation of the temperature based on the luminance or saturation of the image would defeat such fine perception of the different temperatures by the observer.

In fact, the human eye can only distinguish a limited number on the order of some tens of luminance hue values.

It can sense, however, color differences much better.

For this reason, the temperature information is converted to signals which display the temperature in false colors, by assigning a red color to the highest temperatures and yellow, green, cyano and blue colors to gradually lower temperatures.

For this purpose, the LUT memories 43, 44, 45 associate, with each input temperature code, a suitable code (preferably, but not necessarily, of 8 bits) representing a luminance in the red, green and blu bands, respectively.

The fourth LUT 46 is used, on the other hand, to convert the temperature code to a level of grey or overall luminance code.

The memories 43, 44, 45, 46 may be commercially available components (of both the read-only and read/write types) having read times well below 70 nsec.

In this way, at a time T4 following T3, when the signal CK is again asserted, the different codes read from the memories 43...46, as stably addressed from time T3, are sure to be available at the memory outputs and can be stably input to corresponding digital-to-analog converters 48, 49, 50, 51, clocked by the signal CK, which will generate a luminance signal of red, green, blu and grey, respectively.

In view of converters with a conversion time on the order of a few tens nsec being available on the market, the conversion function can be performed within the time limits set by the frequency of the signal CK, and the analog output signals from the converters will correspond, albeit with some time lag, to the binary code periodically updated and received at the input.

The analog signals corresponding to the different colors or grey are then input to the low-pass filters 52, 53, 54, 55, and thence to the amplifiers, impedance adapters, 56, 57, 58, 59 for use as modulation signals for a TV monitor or equivalent display means.

It can be seen that, even for the output signals, the level of black is imposed, rather than by cascade transfer of black information picked up from the A/D converters, by generation from the unit 61 of a signal TTLSYNC which brings to a state of high impedance (or to ground) the outputs of the converters 48, 51 with a time lag, with respect to the reception of the input signal SYNC, which corresponds to the signal propagation time through the chain of functional elements.

The time lag is, of course, T4-T0 plus the conversion time of the converters 48, 51.

The signal TTLSYNC, as level/impedance matched and delayed by the element 63, is then transferred to the output as synchronism signal for the TV monitors downstream.

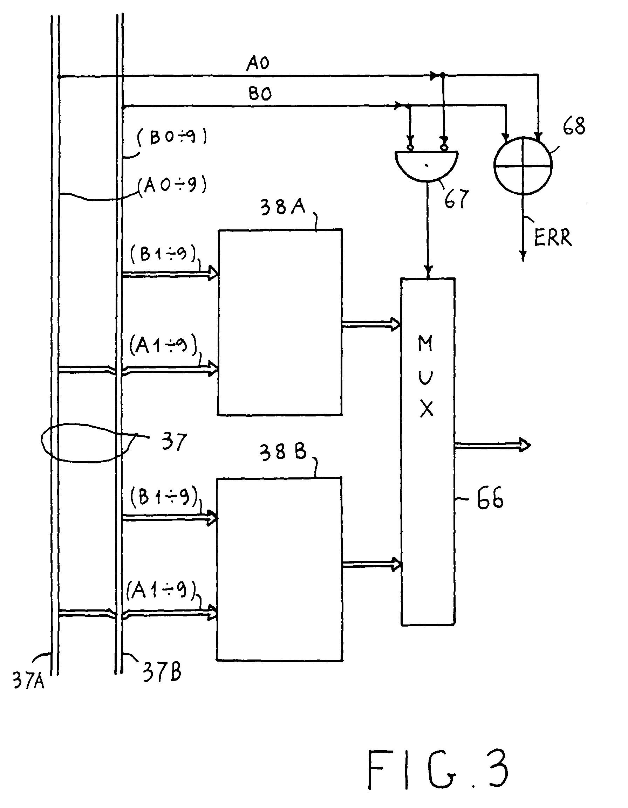

It will be appreciated, therefore, that the apparatus of Figure 3 implements a real-time image processing method which is split into a number of steps, namely A/D conversion, first digital processing, second digital processing, and D/A conversion, each to be carried out within one period of a clock signal which is shorter than the period of presentation of the information about successive image spots to the apparatus, even if this period is on the order of tens nsec.

Real-time processing is made feasible by that the process is split into several steps, each carried out by self-supporting functional units arranged into a structure of the pipelined type, and by the provision of numerical processing functional units which, rather than being comprised of computation logic networks of the sequential type controlled by a program, and being accordingly slower, consist of transcoding or associating storages capable of operating within the time limits imposed by the frequency band of the input signals to be processed.

Figure 3 illustrates in schematic form an improvement to the apparatus according to the invention which allows the storage capacity requirements of the transcoding operations to be minimized.

From Plank's law (for which reference can be had to the aforementioned Application EP-A-469258) it is known that the emissions at the different frequencies are related to one another, and that for a radiation source at a predetermined temperature, to values of E1 within a predetermined range there can only correspond values of E2 within another predetermined range.

In other words, when the band E1 luminance is high, the band E2 luminance is also high, and when the band E1 luminance is low, the band E2 luminance is also low.

If the possible values of E1 within the temperature range under examination are described by a 10-bit code and the corresponding values of E2 are also described by a 10-bit code, then it can be ruled out a priori that one or more bits of more significant weight of the codes describing E1 and E2 may have different values.

Thus, the memory 38 may be constructed as a plurality of modules addressed by the least significant bits of the described codes of E1, E2, selected according to the values of the most significant bits.

In Figure 3, the memory 38 comprises two modules 38A and 38B addressed by the least significant bits A(1:9) and B(1:9) of the codes A(0:9) and B(0:9) describing the luminances E1, E2.

The channel 37 has been depicted for clarity as comprised of two subchannels 37A and 37B, being each a 10-bit one, for transferring the two codes.

The outputs of the two modules 38A and 38B are connected to the inputs of a multiplexer 66.

Bits A0 and B0 of the two codes are input to an AND (or NAND) gate 67 whose output controls the multiplexer 66 and enables transfer of the output code from the module 38A or module 38B, according to whether the bits A0, B0 are at a logic level of 1 or 2.

The multiplexer 66 could be also controlled by just one of the two bits A0, B0, with no need for intermediate AND, NAND gates.

It may be appreciated that in this case, each of the modules 38A, 38B would be required to have a capacity of 256 kbytes only, and on the whole, the memory 38 should have a capacity of 0.5 Mbs, that is one half that considered in connection with Figure 2.

As a safety measure, an exclusive OR logic element 68 may be provided which would be input the bits A0 and B0 and signal as errors any situations where the two bits A0, B0 have different logic levels and are not covered, therefore, by the transcoding memory.

Obviously, and depending on applications and temperature ranges to be analyzed, combinations of a larger number of bits may be excluded, e.g. the bits A(0:1) and B(0:1), correspondingly reducing the storage capacity to 2x64 kbytes or a multiple N>2 of 64 kbytes to also take account of possible combinations of the bits A (0:1) and B(0:1) with bits of different value.

It should be understood that many other changes could be made.

For example, when the real-time mapping is used in a regulating system, the conversion of the temperature codes output from the register 41 may be omitted, the temperature codes being used to construct digital maps for locating critical temperature distributions and automatically taking appropriate control actions.

Conversely, where the image pick-up apparatus (TV camera) has built-in analog-to-digital conversion devices, these should be regarded as equivalents and substituents for those shown in Figure 2 and, hence, a part of the apparatus according to the present invention.

Further, while for convenience of manufacture each processing stage is clocked, in Figure 2, by the same periodic signal CK, it will be appreciated that the various stages could be clocked by discrete periodic signals, CK1, CK2, CK3, all at the same frequency and spaced in time from one another by an interval not exceeding their period.

For example, if the conversion time of the converters 33, 34 is less than the sampling period, and the converters are operated by a signal CK1, the registers 35 and 36 may be operated by a signal CK2, with a shorter time lag on CK1 than the period P, and so on with the following stages.

## Claims

1. An apparatus for real-time mapping the temperature of a flame, comprising:

    input means (20,21) for receiving a pair of analog signals which vary over time and represent each the emission in two discrete color bands, respectively, of flame spots scanned at successive times by spectral emission detection means, said signals varying within a frequency band with a frequency maximum,

    timing means (61) for generating at least a first clock signal having a first frequency not below said frequency maximum,

    analog-to-digital conversion means (33,34) operated by said first clock signal to sample said analog signals at said first frequency and convert said sampled signals to a pair of digital codes within one period of said first clock signal,

    first latching means (35,36) clocked by a first latching signal at said first frequency to latch said pair of digital codes,

    first storage means (38) addressed by said latched code pair in said first latching means (35,36) to output, within one period of said first frequency, a third code representing a temperature associated with said code pair and correspondingly with said sampled signals, and

    second latching means (41) clocked by a second latching signal at said first frequency to latch said third code.

2. An apparatus as in Claim 1, further comprising:

    second storage means (43,44,45,46) addressed by said third latched code in said second latching means (41) to output, within one period of said first frequency, a plurality of codes, each representing a luminance in a predetermined color band, and

    second digital-to-analog conversion means (48,49,50,51) operated by a third latching signal at said first frequency to staticize said plurality of codes and convert said plurality of codes, within one period of said first frequency, to a plurality of analog signals.

3. An apparatus as in the preceding claims, further comprising:

    means (60) for receiving a first synchronism signal (SYNC) at a lower frequency than said first frequency, said timing means (61) converting said first synchronism signal (SYNC) to a second synchronism signal (SYNC1) having predetermined electric characteristics and a predetermined delay with respect to said first synchronism signal (SYNC), and

    means (29,30) intervening between said input means (20,21) and said analog-to-digital conversion means (33,34) and being operated by said second synchronism signal (SYNC1) to periodically drive said analog signal pair to a null voltage level relative to ground.

4. An apparatus as in either Claim 2 or 3, wherein said timing means (61) generate, in response to said first synchronism signal (SYNC), a third synchronism signal (TTLSYNC) having predetermined electric characteristics and a predetermined delay with respect to said first synchronism signal (SYNC), said third synchronism signal (TTLSYNC) controlling said second digital-to-analog conversion means (48,49,50,51) to periodically bring the outputs from said means to a state of high impedance.

5. An apparatus as in the preceding claims, wherein said first, second and third latching signals are coincident with said first clock signal.

6. An apparatus as in the preceding claims, comprising analog adder means (31) for algebraically adding a predetermined shift voltage to said analog signals sampled by said analog-to-digital converters (33,34).

7. An apparatus as in the preceding claims, wherein said first storage means (38) comprise at least first and second storage modules (38a,38b) addressed by the least significant bits of said code pair, to the exclusion of at least the most significant bit of each code in said pair, a multiplexer (66) for selectively inputting an output code from one of said modules to said staticization means, and means of controlling said multiplexer (66) according to the logic level of at least one of the most significant bits of said code pair.

8. An apparatus as in the preceding claims, wherein said first storage means (38) are memories of the EEPROM type.

9. An apparatus as in the preceding claims, comprising an interface unit (39) for setting said apparatus to a predetermined state.

10. An apparatus as in Claim 9, wherein said first storage means (38) are a read/write memory brought to a predetermined state by means of write commands applied through said interface unit (39).

**Patentansprüche**

1. Vorrichtung zur Echtzeit-Aufnahme der Temperatur einer Flamme, umfassend

eine Eingabeeinrichtung (20, 21) zum Empfangen eines Paares von analogen Signalen, die zeitlich variieren und die jeweils die Emission von Flammenpunkten, die zu nacheinanderfolgenden Zeiten durch Spektralemissionsdetektoren abgetastet wurden, in zwei Farbspektren darstellen, wobei die Signale innerhalb eines Frequenzbandes mit einem Frequenzmaximum variieren;

eine Takteinrichtung (61) zum Erzeugen von mindestens einem ersten Taktsignal mit einer ersten Frequenz nicht unter dem Frequenzmaximum;

eine A/D-Wandlereinrichtung (33, 34), die vom ersten Taktsignal betrieben wird, um die analogen Signale bei der ersten Frequenz abzutasten und die abgetasteten Signale innerhalb einer Periode des ersten Taktsignals in ein Paar von Digitalcodes umzuwandeln;

eine erste Registereinrichtung (latching means) (35, 36), die von einem ersten Registersignal bei der ersten Frequenz getaktet wird, zum Registrieren des Paares von Digitalcodes;

eine erste Speichereinrichtung (38), die vom registrierten Codepaar in der ersten Registereinrichtung (35, 36) adressiert wird, zur Ausgabe eines dritten Codes innerhalb einer Periode der ersten Frequenz, der eine Temperatur darstellt, die dem Codepaar zugeordnet ist und dementsprechend den abgetasteten Signalen; und

eine zweite Registereinrichtung (41), die von einem zweiten Registersignal bei der ersten Frequenz getaktet wird, zum Registrieren des dritten Codes.

2. Eine Vorrichtung nach Anspruch 1, weiterhin umfassend

eine zweite Speichereinrichtung (43, 44, 45, 46), die vom dritten registrierten Code in der zweiten Registereinrichtung (41) adressiert wird, zur Ausgabe einer Vielzahl von Codes innerhalb einer Periode der ersten Frequenz, die jeweils eine Leuchtdichte in einem vorherbestimmten Band darstellen; und

eine zweite D/A-Wandlereinrichtung (48, 49, 50, 51), die von einem dritten Registersignal bei der ersten Frequenz betrieben wird, um die Vielzahl von Codes zu speichern und innerhalb einer Periode der ersten Frequenz in eine Vielzahl von analogen Signalen umzuwandeln.

3. Eine Vorrichtung nach den vorangegangenen Ansprüchen, weiterhin umfassend

eine Einrichtung (60) zum Empfangen eines ersten Gleichlaufsignals (SYNC) bei einer niedrigeren Frequenz als die erste Frequenz, wobei die Takteinrichtung (61) das erste Gleichlaufsignal (SYNC) in ein zweites Gleichlaufsignal (SYNC1) umwandelt, das vorherbestimmte elektrische Eigenschaften und eine vorherbestimmte Verzögerung in Bezug auf das erste Gleichlaufsignal (SYNC) aufweist; und

eine Einrichtung (29, 30) zum Eingreifen zwischen der Eingabeeinrichtung (20,21) und der A/D-Wandlereinrichtung (33, 34), die betrieben wird vom zweiten Gleichlaufsignal (SYNC1), um das analoge Signalpaar periodisch auf einen Spannungspegel von Null in Bezug auf die Masse zu bringen.

4. Eine Vorrichtung entweder nach Anspruch 2 oder 3, worin die Takteinrichtung (61) in Reaktion auf das erste Gleichlaufsignal (SYNC) ein drittes Gleichlaufsignal (TTLSYNC) erzeugt, das vorherbestimmte elektrische Eigenschaften und eine vorherbestimmte Verzögerung in Bezug auf das erste Gleichlaufsignal (SYNC) aufweist, wobei das dritte Gleichlaufsignal (TTLSYNC) die zweite D/A-Wandlereinrichtung (48, 49, 50, 51) steuert, um die Ausgaben dieser Einrichtung in einen Zustand hoher Impedanz zu versetzen.

5. Eine Vorrichtung nach den vorangegangenen Ansprüchen, worin die ersten, zweiten und dritten Registersignale mit dem ersten Taktsignal zusammenfallen.

6. Eine Vorrichtung nach den vorangegangenen Ansprüchen, umfassend eine analoge Additionseinrichtung (31), um eine vorherbestimmte Verschiebungsspannung algebraisch zu den von den A/D-Wandlern (33, 34) abgetasteten analogen Signalen hinzuzuaddieren.

7. Eine Vorrichtung nach den vorangegangenen Ansprüchen, worin die erste Speichereinrichtung (38) mindestens erste und zweite Speichermodule (38a, 38b) umfaßt, die von den am wenigsten wichtigen Bits des Codepaares adressiert werden unter Ausschluß mindestens der wichtigsten Bits von jedem Code in dem Paar, einen Mehrwegschalter (66), um ausgewählt einen Ausgabecode von einem der Module in die Speichereinrichtung einzugeben, und eine Einrichtung, um den Mehrwegschalter (66) anhand des Logikpegels von mindestens einem der wichtigsten Bits des Codepaares zu steuern.

8. Eine Vorrichtung nach den vorangegangenen Ansprüchen, worin die erste Sp eichereinrichtung (38) ein Speicher vom EEPROM-Typ ist.

9. Eine Vorrichtung nach den vorangegangenen Ansprüchen, umfassend eine Schnittstelleneinheit (39), um die Vorrichtung in einen vorherbestimmten Zustand zu versetzen.

10. Eine Vorrichtung nach den vorangegangenen Ansprüchen, worin die erste Speichereinrichtung (38) ein Lese/Schreib-Speicher ist, der mittels Schreibeingaben, die durch die Schnittstelleneinheit (39) eingegeben werden, in einen vorherbestimmten Zustand versetzt wird.

## Revendications

1. Appareil destiné à former en temps réel une image de la température d'une flamme, comprenant :

des moyens (20,21) d'entrée destinés à recevoir une paire de signaux analogiques qui varient au cours du temps et représentent chacun respectivement l'émission, dans deux bandes de couleur discrètes, de points de la flamme qui sont analysés à des instants successifs par des moyens de détection d'émission spectrale, lesdits signaux variant à l'intérieur d'une bande de fréquence ayant un maximum de fréquence, des moyens (61) de cadencement destinés à produire au moins un premier signal d'horloge ayant une première fréquence non inférieure audit maximum de fréquence, des moyens (33,34) de conversion analogique-numérique mis en fonctionnement par ledit premier signal d'horloge pour échantillonner lesdits signaux analogiques à ladite première fréquence et convertir lesdits signaux échantillonnés en une paire de codes numériques au cours d'une période dudit premier signal d'horloge, des premiers moyens (35,36) de verrouillage cadencés par un premier signal de verrouillage à ladite première fréquence pour verrouiller ladite paire de codes numériques, des premiers moyens (38) de stockage adressés par ladite paire de codes verrouillée dans lesdits premiers moyens (35,36) de verrouillage pour fournir en sortie, en moins d'une période de ladite première fréquence, un troisième code représentant une température associée à ladite paire de codes et en correspondance avec lesdits signaux échantillonnés, et des seconds moyens (41) de verrouillage cadencés par un second signal de verrouillage à ladite première fréquence pour verrouiller ledit troisième code.

2. Appareil selon la revendication 1, comprenant en outre :

des seconds moyens (43,44,45,46) de stockage adressés par ledit troisième code verrouillé dans lesdits seconds moyens (41) de verrouillage pour fournir en sortie, en moins d'une période de ladite première fréquence, un en-

semble de codes représentant chacun une luminance dans une bande de couleur prédéterminée, et

des seconds moyens (48,49,50,51) de conversion numérique-analogique mis en fonctionnement par un troisième signal de verrouillage à ladite première fréquence pour effectuer une conversion série-parallèle dudit ensemble de codes et convertir ledit ensemble de codes, en moins d'une période de ladite première fréquence, en un ensemble de signaux analogiques.

3. Appareil selon les revendications précédentes, comprenant en outre :

des moyens (60) destinés à recevoir un premier signal de synchronisme (SYNC) à une fréquence inférieure à ladite première fréquence, lesdits moyens (61) de cadencement convertissant ledit premier signal de synchronisme (SYNC) en un second signal de synchronisme (SYNC1) ayant des caractéristiques électriques prédéterminées et un retard prédéterminé par rapport audit premier signal de synchronisme (SYNC), et

des moyens (29,30) disposés entre lesdits moyens (20,21) d'entrée et lesdits moyens (33,34) de conversion analogique-numérique et mis en fonctionnement par ledit second signal de synchronisme (SYNC1) pour faire périodiquement passer ladite paire de signaux analogiques à un niveau de tension nulle par rapport à la masse.

4. Appareil selon la revendication 2 ou 3, dans lequel lesdits moyens (61) de cadencement produisent, en réponse audit premier signal de synchronisme (SYNC), un troisième signal de synchronisme (TTLSYNC) ayant des caractéristiques électriques prédéterminées et un retard prédéterminé par rapport audit premier signal de synchronisme (SYNC), ledit troisième signal de synchronisme (TTLSYNC) commandant lesdits seconds moyens (48,49,50,51) de conversion numérique-analogique pour faire périodiquement passer les sorties desdits moyens à un état de haute impédance.

5. Appareil selon les revendications précédentes, dans lequel lesdits premier, second et troisième signaux de verrouillage coïncident avec ledit premier signal d'horloge.

6. Appareil selon les revendications précédentes, comprenant des moyens (31) additionneurs analogiques destinés à additionner algébriquement une tension de décalage prédéterminée auxdits signaux analogiques échantillonnés par lesdits convertisseurs (33,34) analogique-numérique.

7. Appareil selon les revendications précédentes, dans lequel lesdits premiers moyens (38) de stockage comprennent au moins des premier et second modules (38a,38b) de stockage adressés par les bits de poids faible de ladite paire de codes, à l'exclusion d'au moins le bit de poids fort de chaque code de ladite paire, un multiplexeur (66) destiné à fournir sélectivement en entrée un code de sortie de l'un desdits modules auxdits moyens de conversion série-parallèle, et des moyens pour commander ledit multiplexeur (66) en fonction du niveau logique d'au moins l'un des bits de poids fort de ladite paire de codes.

8. Appareil selon les revendications précédentes, dans lequel lesdits premiers moyens (38) de stockage sont des mémoires du type mémoire morte programmable effaçable électriquement (EEPROM).

9. Appareil selon les revendications précédentes, comprenant une unité (39) d'interface destinée à faire passer ledit appareil dans un état prédéterminé.

10. Appareil selon la revendication 9, dans lequel lesdits premiers moyens (38) de stockage sont une mémoire de lecture/écriture qui est amenée dans un premier état au moyen d'instructions d'écriture appliquées par l'intermédiaire de ladite unité (39) d'interface.

FIG.1

FIG.2

FIG.3